# EUROPÄISCHE PATENTANMELDUNG

(11) **EP 3 916 423 A1**
(43) Veröffentlichungstag der Anmeldung: **01.12.2021**
(21) Anmeldenummer: 20176354.7
(22) Anmeldetag: 25.05.2020
(51) Int. Cl.: G01S 7/481, G01S 17/42, G01S 17/32

(54) **VORRICHTUNG UND VERFAHREN ZUR SCANNENDEN MESSUNG DES ABSTANDS ZU EINEM OBJEKT**

(71) Anmelder: Scantinel Photonics GmbH, 89073 Ulm (DE)
(72) Erfinder: Davydenko, Vladimir, 76332 Bad Herrenalb (DE)
(74) Vertreter: Ostertag & Partner Patentanwälte mbB

(57) **Zusammenfassung**

Die Vorrichtung (14) zur scannenden Abstandsmessung hat eine Lichtquelle (16), die ein optisches Ausgangssignal mit einer zeitlich variierenden Frequenz erzeugt. Eine optische Verteilmatrix (M1 bis M4) hat die Struktur eines Baums mit mehreren Niveaus (N1 bis N3) und verteilt das Ausgangssignal sukzessive auf mehrere Freiraumkoppler (FSC). Die optische Verteilmatrix (M1 bis M4) weist mindestens einen ersten optischen Schalter (S11), der eine erste Schaltzeit und eine erste Einfügedämpfung hat, sowie mehrere zweite optische Schalter (S21, S22, S31 bis S34) auf, die jeweils eine zweite Schaltzeit, die länger ist als die erste Schaltzeit, und eine zweite Einfügedämpfung haben, die kleiner ist als die erste Einfügedämpfung. Der erste optische Schalter (S11) ist auf einem Niveau (N1) des Baums angeordnet, das niedriger ist als das Niveau (N2, N3), auf dem die zweiten optischen Schalter (S21, S22, S31 bis S34) angeordnet sind. Bei geeigneter Ansteuerung der Schalter hat die Verteilmatrix (M1 bis M4) die kurze Schaltzeit des ersten optischen Schalters (S11) und insgesamt trotzdem eine niedrige Einfügedämpfung, da überwiegend langsamere Schalter mit niedriger Einfügedämpfung verwendet werden können.

## Beschreibung

### HINTERGRUND DER ERFINDUNG

### 1. Gebiet der Erfindung

Die Erfindung betrifft eine Vorrichtung und ein Verfahren zur scannenden Messung des Abstands zu einem bewegten oder unbewegten Objekt auf der Grundlage der FMCW-LiDAR-Technologie. Solche Vorrichtungen können beispielsweise bei autonom fahrenden Fahrzeugen eingesetzt werden und als photonische integrierte Schaltkreise (PIC, *Photonic Integrated Circuit*) realisiert sein, die keine beweglichen Teile enthalten.

### 2. Beschreibung des Standes der Technik

Zur optischen Abstandsmessung ist ein als FMCW-LiDAR bezeichnetes Messprinzip bekannt, bei dem ein optisches Signal mit zeitlich variierender Frequenz (FMCW steht *für frequency modulated continuous wave*) auf das zu vermessende Objekt gerichtet und nach Reflexion an dem Objekt erfasst und ausgewertet wird. Wenn zusätzlich die Doppler-Verschiebung berücksichtigt wird, lässt sich auch die Relativgeschwindigkeit zwischen der Scanvorrichtung und dem Objekt berechnen. Ausführlicher beschrieben ist dieses Messprinzip beispielsweise in der DE 10 2018 203 315 A1.

Auf diesem Messprinzip beruhende Scanner müssen sehr robust und zuverlässig sein, wenn sie in Fahrzeugen eingesetzt werden sollen. Dies gilt insbesondere dann, wenn die Fahrzeuge autonom fahren, da die Sicherheit beim autonomen Fahren entscheidend von dem Scanner abhängt, der zur Erzeugung eines dreidimensionalen Abbildes der Umgebung eingesetzt wird. Idealerweise enthalten solche Scanner keine empfindlichen beweglichen Bauteile wie Scanspiegel.

Scanner, die als photonische integrierte Schaltkreise realisiert sind, benötigen keine bewegliche Bauteile und sind daher für Anwendungen in Fahrzeugen besonders geeignet. Offenbart sind solche Scanner beispielsweise in der US 2017/0371227 A1 und der US 2019/0377135 A1. Bei diesen Scannern wird eine Verteilmatrix mit mehreren baumartig angeordneten optischen Schaltern eingesetzt, welche die optischen Signale auf unterschiedliche optische Wellenleiter verteilen, die unterschiedlichen Scanrichtungen zugeordnet sind.

Die in solchen Verteilmatrizen eingesetzten optischen Schalter sind in der Regel 1x2-Schalter auf der Basis thermooptischer oder elektrooptischer Mach-Zehnder-Interferometer. An diese Schalter werden für die Anwendung in Abstandsscannern vor allem zwei Anforderungen gestellt. Zum einen müssen derartige Schalter sehr schnell sein, d.h. innerhalb einer sehr kurzen Zeitspanne die Lichtintensität von einem Ausgang auf einen anderen Ausgang verlagern. Nur dann ist es möglich, in Echtzeit mit ausreichend hoher räumlicher Auflösung die Abstände zu den Objekten in der Umgebung zu erfassen und auf diese Weise ein dreidimensionales Bild der Umgebung zu erhalten.

Zum anderen müssen derartige optische Schalter eine sehr kleine Einfügedämpfung (engl. *insertion loss*) haben. Die Einfügedämpfung gibt an, wie stark die optischen Signale beim Durchtritt durch die optischen Schalter abgeschwächt werden. Da die vom Objekt reflektierten optischen Signale bereits sehr schwach sind und beim Durchtreten der Verteilmatrix in Rückrichtung mehrere optische Schalter passieren müssen, muss die Einfügedämpfung der optischen Schalter möglichst klein sein. Ansonsten sind die Intensitäten der reflektierten optischen Signale auf dem Detektor so gering, dass der Grenzwert für das zulässige Signal-Rausch-Verhältnis unterschritten. Die Abstandswerte lassen sich dann nicht mehr zuverlässig ermitteln.

Die am Markt verfügbaren optischen Schalter haben unterschiedliche Bauformen und dementsprechend auch unterschiedliche Eigenschaften, was die Schaltzeit und die Einfügedämpfung betrifft. Diese beiden Eigenschaften sind aus physikalischen Gründen derart miteinander verknüpft, dass bei kurzen Schaltzeiten zwangsläufig auch eine höhere Einfügedämpfung auftritt und umgekehrt. Wenn man mit den bislang verfügbaren optischen Schaltern Verteilmatrizen für Abstandscanner aufbaut, sind diese somit entweder aufgrund der langen Schaltzeiten zu langsam, oder sie dämpfen die eingehenden optischen Signale so stark, dass keine zuverlässige Abstandsmessung mehr möglich ist.

### ZUSAMMENFASSUNG DER ERFINDUNG

Aufgabe der Erfindung ist es deswegen, eine Vorrichtung und ein Verfahren zur scannenden Messung des Abstands zu einem Objekt anzugehen, mit denen sich der Abstand zu dem Objekt zuverlässig und mit hoher räumlicher Auflösung messen lässt.

Gelöst wird diese Aufgabe durch eine Vorrichtung zur scannenden Messung des Abstands zu einem Objekt, die eine Lichtquelle aufweist, die dazu eingerichtet ist, ein optisches Ausgangssignal mit einer zeitlich variierenden Frequenz zu erzeugen. Die Vorrichtung weist ferner eine optische Verteilmatrix auf, welche die Struktur eines Baums mit mehreren Niveaus hat und dazu eingerichtet ist, das in der Lichtquelle erzeugte optische Ausgangssignal sukzessive auf mehrere optische Wellenleiter zu verteilen. Die optische Verteilmatrix weist mindestens einen ersten optischen Schalter auf, der eine erste Schaltzeit und eine erste Einfügedämpfung hat. Ferner weist die optische Verteilmatrix mehrere zweite optische Schalter auf, die jeweils eine zweite Schaltzeit, die länger ist als die erste Schaltzeit, und eine zweite Einfügedämpfung haben, die kleiner ist als die erste Einfügedämpfung. Der erste optische Schalter ist auf einem Niveau des Baums angeordnet, das niedriger ist als das Niveau, auf dem die zweiten optischen Schalter angeordnet sind. Die Vorrichtung umfasst außerdem mehrere Freiraumkoppler, die mit den optischen Wellenleitern verbunden und jeweils dazu eingerichtet sind, ein in einem der optischen Wellenleiter geführtes optisches Ausgangssignal in den Freiraum auszukoppeln und ein an dem Objekt reflektiertes optisches Ausgangssignal als optisches Messignal einzukoppeln. Die Vorrichtung umfasst außerdem einen Detektor, der dazu eingerichtet ist, eine Überlagerung des optischen Messsignals mit dem von der Lichtquelle erzeugten optischen Ausgangssignals zu erfassen. Eine Ablenkoptik der Vorrichtung ist dazu eingerichtet, die aus den Freiraumkopplern ausgekoppelten Ausgangssignale so abzulenken, dass sie in unterschiedliche Richtungen abgestrahlt werden. Eine Auswerteeinrichtung ist dazu eingerichtet, aus der von den Detektoren erfassten Überlagerung einen Abstand zu dem Objekt zu bestimmen.

Die Erfindung beruht auf der Erkenntnis, dass man bei geeigneter Ansteuerung der optischen Schalter in der Schaltmatrix nicht alle optischen Schalter mit kurzen Schaltzeiten betreiben muss. Wenn ein schneller optischer Schalter (also ein Schalter mit kurzer Schaltzeit) auf einem niedrigen Niveau des Baums angeordnet ist, können die darauf folgenden optischen Schalter auf den höheren Niveaus des Baums langsamer sein und somit eine längere Schaltzeit haben. In diesem Fall ist es nämlich möglich, dass die langsameren Schalter während eines Messintervalls, bei dem keine optischen Signale die langsameren Schalter passieren, ihren Schaltzustand ändern, um für das nächste Messintervall vorbereitet zu sein. Nur der optische Schalter auf dem niedrigen Niveau muss schnell schalten, um zwischen zwei aufeinander folgenden Messintervallen mit möglichst wenig Verzögerung eine Verbindung zu dem anderen Zweig des Baums herstellen zu können. Während also in einem Messintervall ein mit dem schnellen Schalter verbundener Zweig aktiv ist, werden in dem anderen Zweig die langsamen Schalter umgestellt und befinden sich in der richtigen Position, wenn nach Abschluss des Messintervalls der schnelle Schalter die aktiven Zweige wechselt.

Die Schaltzeit wird vorliegend definiert als die Zeitspanne, die benötigt wird, um 90% der Lichtintensität in den jeweils anderen Schaltzustand zu überführen.

Sofern keine besonderen Anforderungen bestehen, in welcher Reihenfolge die Freiraumkoppler von der Schaltmatrix mit der Lichtquelle verbunden werden, genügt es, wenn ein einziger erster optischer Schalter mit kurzer Schaltzeit und höherer Einfügedämpfung auf dem niedrigsten Niveau des Baums angeordnet ist und auf allen anderen Niveaus ausschließlich zweite optische Schalter angeordnet sind, die langsamer sind, aber eine niedrigere Einfügedämpfung haben. Bei einer Verteilmatrix mit 16 Ausgängen durchlaufen die optischen Signale z.B. vier 1x2-Schalter, von denen erfindungsgemäß aber nur der im Lichtweg als erster durchtretene Schalter auf dem niedrigsten Niveau einer eine kurze Schaltzeit aufweisen muss und deswegen eine höhere Einfügedämpfung hat. Durch die erfindungsgemäße Anordnung unterschiedlicher Schaltertypen kann die Einfügedämpfung der gesamten Verteilmatrix so weit reduziert werden, dass die vom Detektor erfassten Signale ein ausreichend hohes Signal-Rausch-Verhältnis haben. Die Geschwindigkeit der gesamten Verteilmatrix wird nur durch die Schaltzeit des schnellen ersten Schalters begrenzt. Solange die zweiten langsamen Schalter eine Schaltzeit haben, die kürzer ist als die Messfrequenz, können die zweiten optischen Schalter auf minimale Einfügedämpfung hin optimiert werden.

Soweit hier und im Folgenden davon die Rede ist, dass bestimmte optische Komponenten oder Baugruppen miteinander verbunden sind, so schließt dies auch nicht-permanente Verbindungen ein, also Verbindungen, die nur zeitweise über optische Schalter hergestellt werden.

Welche optischen Schalter konkret zum Einsatz kommen, hängt von der konkreten Anwendung ab. Speziell für die Anwendung in Abstandsscannern, die in autonom fahrenden Fahrzeugen eingesetzt werden, haben sich 1x2-Schalter auf der Basis von thermooptischen oder elektrooptischen Mach-Zehnder-Interferometern als geeignet erwiesen. Im Prinzip kommen aber auch andere Schalter, zum Beispiel 1x3-Schalter oder generell nxm-Schalter in Betracht, wobei vorzugsweise n < mgilt.

Bei einem Ausführungsbeispiel enthält die Ablenkoptik eine vordere Brennebene, wobei die Freiraumkoppler oder Bilder der Freiraumkoppler in der vorderen Brennebene der Ablenkoptik angeordnet sind. Dadurch verlassen die optischen Ausgangssignale die Ablenkoptik als kollimierte Lichtstrahlen, deren Richtung vom Ort abhängt, an dem Ausgangssignale aus einem Freiraumkoppler austreten. Bei einer solchen Anordnung kann auf zusätzliche Mikrolinsen hinter den Freiraumkopplern zum Zwecke der Kollimation verzichtet werden.

Für die Detektoren haben sich symmetrische Fotodetektoren (engl. *balanced photodetectors*) als besonders geeignet herausgestellt, denen nicht nur die vom Objekt reflektierten optischen Messsignale, sondern auch die von der Lichtquelle erzeugten optischen Ausgangssignale zugeführt werden. Derartige Detektoren haben nur eine geringe Empfindlichkeit gegenüber optischem Rauschen, das von der Lichtquelle erzeugt wird.

Bei einem Ausführungsbeispiel ist die Lichtquelle dazu eingerichtet, gleichzeitig mehrere optische Ausgangssignale mit zeitlich variierender Frequenz in unterschiedlichen Frequenzbändern zu erzeugen. Durch Verwenden eines Gitters kann das Licht in den unterschiedlichen Frequenzbändern in unterschiedliche Richtungen abgestrahlt werden, wodurch ein Scannen nicht nur in einer Ebene, sondern in allen drei Raumrichtungen möglich ist. Die Lichtquelle kann in diesem Fall zum Beispiel mehrere Einzelquellen aufweisen, die über eine Sammelmatrix, die mehrere optische Schalter und/oder optische Koppler aufweist, mit der Verteilmatrix verbunden ist. Anstelle eines Gitters kann auch ein anderes dispersives optisches Element vorgesehen und insbesondere Teil der Ablenkoptik sein, das die optischen Ausgangssignale in einer ersten Ebene wellenlängenabhängig aufspaltet, die zumindest im Wesentlichen senkrecht zu einer zweiten Ebene angeordnet ist, innerhalb derer die sich aus den Freiraumkopplern austretenden optischen Ausgangssignale ausbreiten.

Ein Scannen in allen drei Raumrichtungen ist aber auch möglich, wenn die Freiraumkoppler in einem regelmäßigen oder unregelmäßigen zweidimensionalen Array neben- und übereinander angeordnet sind.

Hinsichtlich des Verfahrens wird die eingangs genannte Aufgabe gelöst durch ein Verfahren zur scannenden Messung des Abstands zu einem Objekt, das die folgenden Schritte aufweist:
a) es werden in zeitlich aufeinander folgenden Messintervallen optische Ausgangssignale erzeugt, wobei sich innerhalb eines jeden Messintervalls eine Frequenz des Ausgangssignals erhöht oder erniedrigt;
b) eine optische Verteilmatrix, welche die Struktur eines Baums mit mehreren Niveaus hat, verteilt das von der Lichtquelle erzeugte optische Ausgangssignal sukzessive auf mehrere optische Wellenleiter, wobei die optische Verteilmatrix
   mindestens einen ersten optischen Schalter aufweist, der eine erste Schaltzeit und eine erste Einfügedämpfung hat,
   mehrere zweite optische Schalter aufweist, die jeweils eine zweite Schaltzeit, die länger ist als die erste Schaltzeit, und eine zweite Einfügedämpfung haben, die kleiner ist als die erste Einfügedämpfung, und
   wobei
   der erste optische Schalter auf einem Niveau des Baums angeordnet ist, das niedriger ist als das Niveau, auf dem die zweiten optischen Schalter angeordnet sind, und wobei
   der erste Schalter nur in Zeiten zwischen zwei aufeinander folgenden Messintervallen betätigt wird und die zweiten Schalter zumindest auch während der Messintervalle betätigt werden,
c) die in den optischen Wellenleitern geführten optischen Ausgangssignale werden in einen Freiraum ausgekoppelt und in unterschiedliche Richtungen abgestrahlt;
d) an dem Objekt reflektierte optische Ausgangssignale werden als optische Messsignale in die optischen Wellenleiter eingekoppelt;
e) die in die optischen Wellenleiter eingekoppelten optischen Messsignale durchtreten die Verteilmatrix und treffen auf einen Detektor;
f) der Detektor erfasst eine Überlagerung der optischen Messsignale mit den von der Lichtquelle erzeugten optischen Ausgangssignalen;
g) aus der von dem Detektor erfassten Überlagerung wird ein Abstand zu dem Objekt bestimmt.

Gegenstand der Erfindung ist außerdem eine Vorrichtung zur scannenden Messung des Abstands zu einem Objekt mit einer Lichtquelle und mit einer optischen Verteilmatrix, welche die Struktur eines Baums mit mehreren Niveaus hat und dazu eingerichtet ist, ein von der Lichtquelle erzeugtes optisches Ausgangssignal sukzessive auf mehrere optische Wellenleiter zu verteilen. Die optische Verteilmatrix weist mindestens einen ersten optischen Schalter auf, der eine erste Schaltzeit und eine erste Einfügedämpfung hat. Sie weist außerdem mehrere zweite optische Schalter auf, die jeweils eine zweite Schaltzeit, die länger ist als die erste Schaltzeit, und eine zweite Einfügedämpfung haben, die kleiner ist als die erste Einfügedämpfung. Der erste optische Schalter ist auf einem Niveau des Baums angeordnet ist, das niedriger ist als das Niveau, auf dem die zweiten optischen Schalter angeordnet sind. Vorzugsweise ist der erste optische Schalter auf dem niedrigsten Niveau des Baums angeordnet, und auf allen anderen Niveaus sind ausschließlich zweite optische Schalter angeordnet. Über die Verteilmatrix werden Ausgangssignale, die von dem Objekt reflektiert wurden, als Messsignale an Detektoren geleitet. Eine Auswerteeinrichtung der Vorrichtung ist dazu eingerichtet, aus von den Detektoren erfassten Messsignalen einen Abstand zu dem Objekt zu bestimmen.

Gegenstand der Erfindung ist zudem eine optische Verteilmatrix für eine Vorrichtung zur scannenden Messung des Abstands zu einem Objekt. Die optische Verteilmatrix hat die Struktur eines Baums mit mehreren Niveaus und ist dazu eingerichtet, ein von einer Lichtquelle erzeugtes optisches Ausgangssignal sukzessive auf mehrere optische Wellenleiter zu verteilen. Die optische Verteilmatrix weist mindestens einen ersten optischen Schalter auf, der eine erste Schaltzeit und eine erste Einfügedämpfung hat. Sie weist außerdem mehrere zweite optische Schalter auf, die jeweils eine zweite Schaltzeit, die länger ist als die erste Schaltzeit, und eine zweite Einfügedämpfung haben, die kleiner ist als die erste Einfügedämpfung. Der erste optische Schalter ist auf einem Niveau des Baums angeordnet ist, das niedriger ist als das Niveau, auf dem die zweiten optischen Schalter angeordnet sind. Vorzugsweise ist der erste optische Schalter auf dem niedrigsten Niveau des Baums angeordnet, und auf allen anderen Niveaus sind ausschließlich zweite optische Schalter angeordnet.

Gegenstand der Erfindung ist ferner ein Verfahren zur scannenden Messung des Abstands zu einem Objekt, bei dem optische Ausgangssignale erzeugt werden, die mit einer optischen Verteilmatrix, welche die Struktur eines Baums mit mehreren Niveaus hat, sukzessive auf mehrere optische Wellenleiter verteilt werden. Die optische Verteilmatrix weist mindestens einen ersten optischen Schalter auf, der eine erste Schaltzeit und eine erste Einfügedämpfung hat. Sie weist außerdem mehrere zweite optische Schalter auf, die jeweils eine zweite Schaltzeit, die länger ist als die erste Schaltzeit, und eine zweite Einfügedämpfung haben, die kleiner ist als die erste Einfügedämpfung. Der erste optische Schalter ist auf einem Niveau des Baums angeordnet ist, das niedriger ist als das Niveau, auf dem die zweiten optischen Schalter angeordnet sind. Vorzugsweise ist der erste optische Schalter auf dem niedrigsten Niveau des Baums angeordnet, und auf allen anderen Niveaus sind ausschließlich zweite optische Schalter angeordnet. Der erste Schalter wird nur in Zeiten zwischen zwei aufeinander folgenden Messintervallen betätigt, und die zweiten Schalter werden zumindest auch während der Messintervalle betätigt. Über die Verteilmatrix werden Ausgangssignale, die von dem Objekt reflektiert wurden, als Messsignale an Detektoren geleitet. Eine Auswerteeinrichtung der Vorrichtung bestimmt aus von den Detektoren erfassten Messsignalen einen Abstand zu dem Objekt.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine schematische Seitenansicht eines Fahrzeugs, das sich einem Objekt nähert, das von einer erfindungsgemäßen Scanvorrichtung erfasst wird;
- Figur 2: eine Draufsicht auf die in der Figur 1 gezeigte Scanvorrichtung;
- Figur 3: den Aufbau der Scanvorrichtung gemäß einem ersten Ausführungsbeispiel in einer schematischen Darstellung;

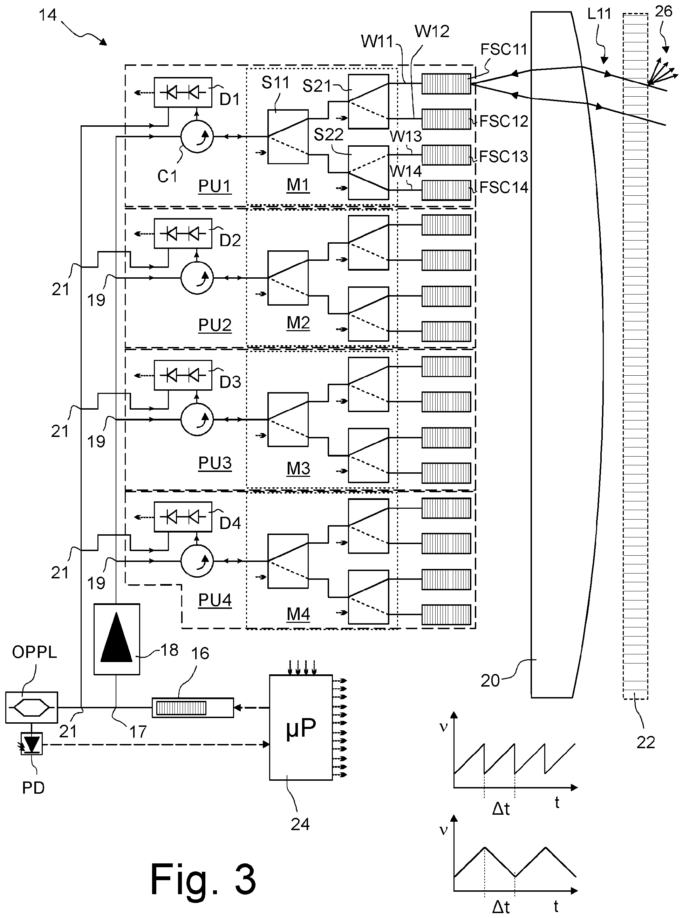

- Figur 3: eine einzelne Verteilmatrix und die Ablenkoptik der in der Figur 3 gezeigten Scanvorrichtung;

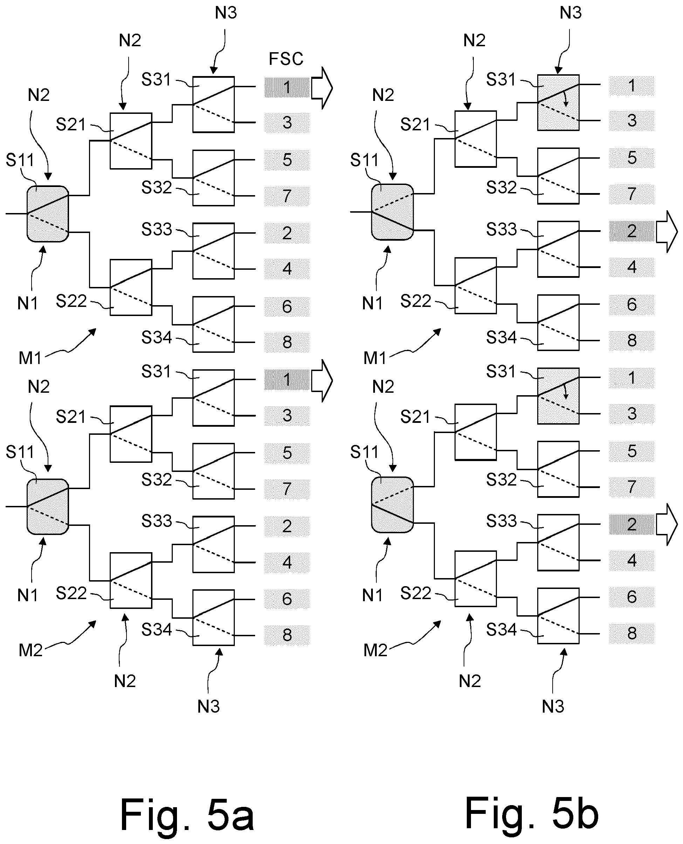

- Figuren 5a bis 5d: die Verteilmatrizen zweier benachbarter Verarbeitungseinheiten in unterschiedlichen Schaltzuständen;

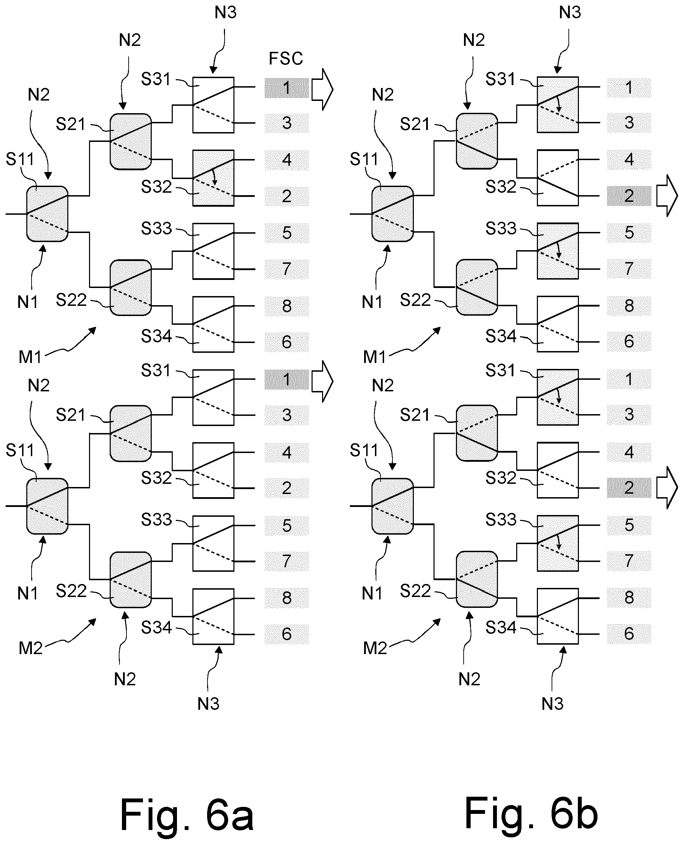

- Figuren 6a und 6b: eine Variante für Verteilmatrizen, bei der schnelle Schalter in zwei unterschiedlichen Niveaus der Verteilmatrizen angeordnet sind, um die Freiraumkoppler flexibler ansteuern zu können;

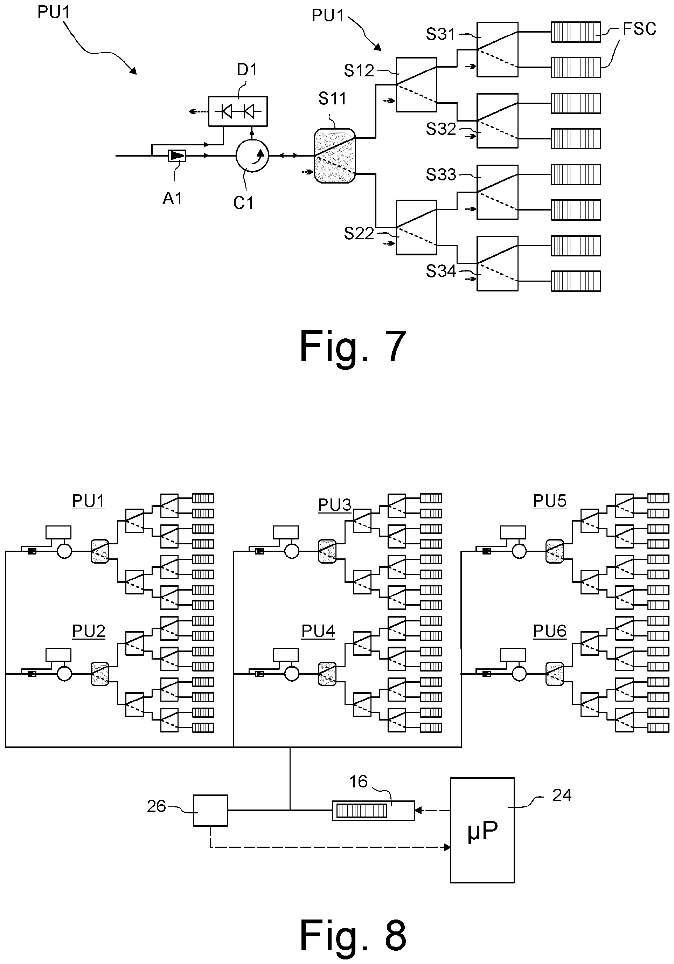

- Figur 7: eine Verarbeitungseinheit der Scanvorrichtung, die zusätzlich einen Verstärker enthält;
- Figur 8: eine Anordnung mehrerer Verarbeitungseinheiten gemäß der Figur 7, die zu einer regelmäßigen Anordnung der Freiraumkoppler in einem zweidimensionalen Array führt.

### BESCHREIBUNG BEVORZUGTER AUSFÜHRUNGSBEISPIELE

### 1. Anwendungsbeispiel

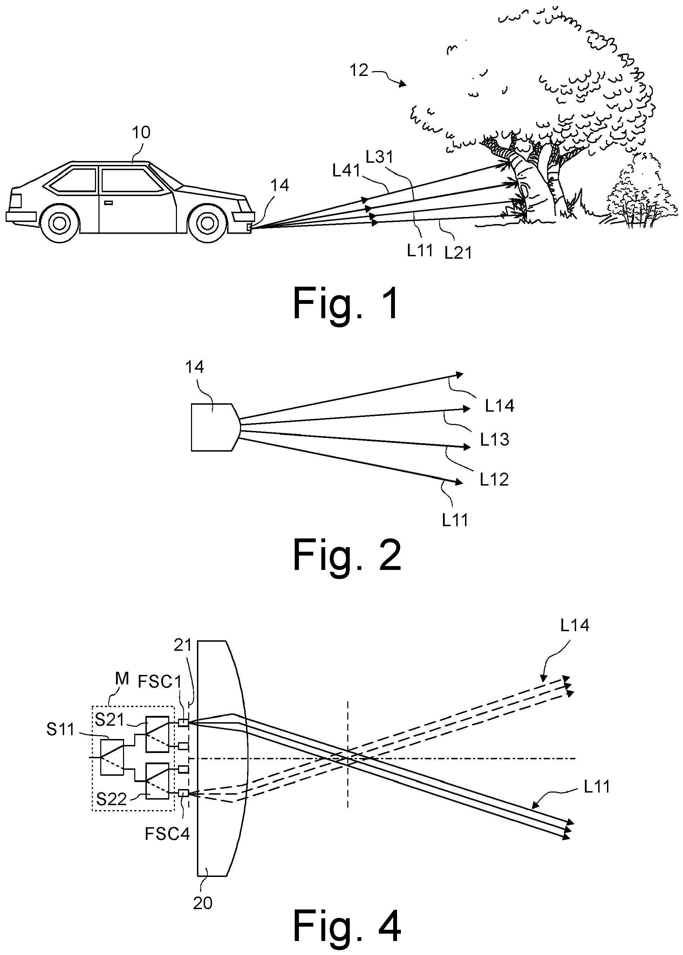

Die Figur 1 zeigt in einer schematischen Seitenansicht ein Fahrzeug 10, das sich einem Objekt 12 nähert, bei dem es sich in der Figur 1 um einen Baum handelt. Das Fahrzeug 10 verfügt über mindestens eine Scanvorrichtung 14, die mit Hilfe von Lichtstrahlen L11, L21, L31 und L41 die vorausliegende Umgebung des Fahrzeugs 10 abtastet, woraus ein dreidimensionales Bild der Umgebung berechnet wird. Außerdem bestimmt die Scanvorrichtung 14 die Relativgeschwindigkeit zu dem Objekt 12. Diese Information ist vor allem dann wichtig, wenn das Objekt 12 ein anderes Fahrzeug ist und sich ebenfalls bewegt.

Die von der Scanvorrichtung 14 ermittelten Informationen über die vorausliegende Umgebung des Fahrzeugs 10 können beispielsweise dazu verwendet werden, den Fahrer des Fahrzeugs 10 Fahrer assistierend bei der Fahrzeugsteuerung zu unterstützen, indem Warnmeldungen erzeugt werden, wenn eine Kollision des Fahrzeugs 10 mit dem Objekt 12 droht. Falls das Fahrzeug 10 autonom fährt, werden die Informationen über die vorausliegende Umgebung von den Steueralgorithmen benötigt, die das Fahrzeug 10 steuern.

Wie in der Figur 1 erkennbar ist, strahlt die Scaneinrichtung 14 in einer vertikalen Ebene (in der Figur 1 ist dies die Papierebene) die Lichtstrahlen L11 bis L41 in unterschiedliche Richtungen ab, wodurch die Umgebung in vertikaler Richtung abgescannt wird. Gleichzeitig findet auch ein Abscannen in horizontaler Richtung statt, wie dies die Figur 2 in einer Draufsicht auf die Scanvorrichtung 14 zeigt. Dort sind vier Lichtstrahlen L11, L12, L13 und L14 gezeigt, die in einer horizontalen Ebene in unterschiedliche Richtungen abgestrahlt werden.

Aus Gründen der Übersichtlichkeit ist in den Figuren 1 und 2 unterstellt, dass nur jeweils vier Lichtstrahlen Ln1 bis Ln4 in vier unterschiedlichen Ebenen, d.h. insgesamt 16 Lichtstrahlen, von der Scaneinrichtung 14 erzeugt werden. Bevorzugt sendet die Scanvorrichtung 14 sehr viel mehr Lichtstrahlen aus. Bevorzugt sind beispielsweise k·2ⁿ Lichtstrahlen, wobei n eine natürliche Zahl zwischen 7 und 13 ist und angibt, wie viele Strahlen in einer von k Ebenen abgestrahlt werden, wobei k eine natürliche Zahl zwischen 1 und 16 ist.

### 2. Aufbau

Die Figur 3 zeigt den Aufbau der Scanvorrichtung 14 in einer schematischen Darstellung. Die Scanvorrichtung 14, die vorzugsweise als photonischer integrierter Schaltkreis aufgebaut ist, kann in der Realität insbesondere hinsichtlich der Dimensionen und dem Verlauf der optischen Wellenleiter anders aussehen.

Die Scanvorrichtung 14 umfasst eine Lichtquelle 16, die ein optisches FMCW-Signal erzeugt. Die Lichtquelle 16 erzeugt somit im Gegensatz zu herkömmlichen Scanvorrichtungen keine kurzen Lichtpulse mit hoher Pulsleistung, sondern ein kontinuierliches Signal, dessen Frequenz v zeitlich variiert. Die Abhängigkeit der Frequenz v von der Zeit t kann beispielsweise durch eine Sägezahnfunktion oder durch eine periodische Dreiecksfunktion gegeben sein, wie dies die beiden in der Figur 3 enthaltenen Graphen illustrieren. Bei einer Sägezahnfunktion steigt die Frequenz v während eines Messintervalls Δt linear an, springt dann zurück auf ihren ursprünglichen Wert, steigt erneut mit der gleichen Steigung linear an usw. Die Dauer des Messintervalls Δt ist länger als die Zeitdauer, die das von der Scanvorrichtung 14 emittierte Licht benötigt, um nach Reflexion am Objekt 12 wieder zurück in die Scanvorrichtung 14 zu gelangen. Bei einer periodischen Dreiecksfunktion ist die Frequenz v eine lineare Funktion der Zeit t, wobei das Vorzeichen der Steigung zwischen aufeinander folgenden Messintervallen Δt wechselt.

Die Lichtquelle 16 kann beispielsweise einen DFB-Laser enthalten, der Licht mit einer Wellenlänge von 1550 nm emittiert und eine Bandbreite zwischen etwa 200 nm und 300 nm hat. Die Frequenzmodulation (engl. *chirp*) wird dem Signal durch eine optische Phasenregelschleife OPPL (engl. *optical phased-locked loop*) aufgeprägt. Der VCO-Block der Phasenregelschleife kann z.B. einen abstimmbaren Laser aufweisen, der in ein Mach-Zehnder-Interferometer (MZI) injiziert wird, gefolgt von einer Photodiode PD. Die Messintervalle Δt haben eine Dauer, die vorzugsweise zwischen 10 µs und 100 µs liegt.

Ein Teil der von der Lichtquelle 16 erzeugten optischen Ausgangssignale wird über einen Verzweiger (engl. *splitter*) 17 einem Verstärker 18 zugeleitet, dort verstärkt und dann gleichmäßig über drei weitere Verzweiger 19 auf vier Verarbeitungseinheiten PU1 bis PU4 aufgeteilt, die in der Figur 3 jeweils mit gestrichelten Linien eingerahmt sind. Die Verarbeitungseinheiten PU1 bis PU4 sind dadurch optisch parallel zueinander angeordnet. Vorzugsweise sind die Verzweiger 19, die zwischen dem Verstärker 18 und den Verarbeitungseinheiten PU1 bis PU4 angeordnet sind, so ausgelegt, dass an den Eingängen der Verarbeitungseinheiten PU1 bis PU4 zu einem gegebenen Zeitpunkt das gleiche optische Ausgangssignal mit gleicher Intensität anliegt. Im Prinzip ist es jedoch auch möglich, die optische Intensität des Ausgangssignals ungleichmäßig aufzuteilen, falls das von der Scanvorrichtung 14 abgestrahlte Licht in bestimmten Richtungen eine höhere Intensität haben soll.

Der Aufbau aller vier Verarbeitungseinheiten PU1 bis PU4 ist gleich und wird im Folgenden am Beispiel der Verarbeitungseinheit PU1 näher erläutert.

Die Verarbeitungseinheit PU1 enthält eine Verteilmatrix M1, welche die Struktur eines Baums mit mehreren Niveaus hat und die von der Lichtquelle 12 erzeugten optischen Ausgangssignale auf mehrere optische Wellenleiter W11 bis W14 verteilt. Im dargestellten Ausführungsbeispiel hat der Baum der Einfachheit halber nur zwei Niveaus. Auf dem ersten Niveau ist ein optischer Schalter S11 und auf dem zweiten Niveau sind zwei optische Schalter S21, S22 angeordnet. Jeder Schalter S11, S21, S22 ist als 1x2-Schalter ausgebildet und kann beispielsweise ein thermooptisches Mach-Zehnder-Interferometer enthalten. Aufgrund der Baumstruktur kann die Verteilmatrix M1 ein eingangsseitig anliegendes Ausgangsignal wahlweise auf jeden der vier optischen Wellenleiter W11 bis W14 verteilen.

Jeder der vier Wellenleiter W11 bis W14 ist mit einem Freiraumkoppler FSC11 bis FSC14 verbunden. Die Freiraumkoppler FSC11 bis FSC14 können beispielsweise als Gitterkoppler (engl. *grating couplers*) oder als Kantenkoppler (engl. *edge coupler*) ausgebildet sein, wie dies an sich im Stand der Technik bekannt ist. Die Freiraumkoppler FSC11 bis FSC14 dienen dazu, die in den optischen Wellenleitern W11 bis W14 geführten optische Ausgangssignale in den angrenzenden Freiraum auszukoppeln und optische Ausgangssignale, die an dem Objekt 12 reflektiert wurden, als optische Messsignale wieder in die Wellenleiter W11 bis W14 einzukoppeln.

Die Verarbeitungseinheit PU1 umfasst außerdem einen Detektor D1, der eine Überlagerung des von dem Objekt 12 reflektierten optischen Messsignals mit einem Referenzsignal erfasst, das aus einem abgezweigten Teil des von der Lichtquelle 16 erzeugten optischen Ausgangssignals besteht. Der Detektor D1 ist zu diesem Zweck als symmetrischer Fotodetektor ausgebildet und über Verzweiger 21 und 17 mit der Lichtquelle 16 verbunden.

Die Verarbeitungseinheit PU1 enthält außerdem einen optischen Zirkulator C1, der so mit der Lichtquelle 16, der Verteilmatrix M1 und dem Detektor D1 verbunden ist, dass von der Lichtquelle 16 zugeführte optische Ausgangssignale an die Verteilmatrix M1 geleitet und von der Verteilmatrix M1 kommende optische Messsignale an den Detektor D1 geleitet werden. Ein optischer Zirkulator hat in der Regel drei Anschlüsse (Ports), wobei Licht, das an einem Anschluss eintrifft, vom Zirkulator an den jeweils nächsten Anschluss weitergeleitet wird (also 1 → 2, 2 → 3 und 3 → 1). Photonisch integrierbare optische Zirkulatoren sind im Stand der Technik bekannt, weswegen auf deren Aufbau an dieser Stelle nicht näher eingegangen wird.

Wie oben bereits erläutert wurde, sind die anderen drei Verarbeitungseinheiten PU2 bis PU4 in gleicher Weise aufgebaut. Die Freiraumkoppler FSC der vier Verarbeitungseinheiten PU1 bis PU4 sind im dargestellten Ausführungsbeispiel entlang einer Linie nebeneinander aufgereiht, und zwar mit einer Teilung p (engl. *pitch*), deren Wert zwischen 25µm und 400 µm liegt. Die Freiraumkoppler FSC befinden sich dabei in der vorderen Brennebene einer Ablenkoptik 20, welche die aus den Freiraumkopplern FSC ausgekoppelten Ausgangssignale so ablenkt, dass sie in unterschiedliche Richtungen abgestrahlt werden. Infolge dieser Anordnung in der vorderen Brennebene besteht eine eindeutige Zuordnung zwischen jedem Freiraumkoppler FSC und einer Abstrahlrichtung.

Die Figur 4 illustriert diesen Zusammenhang in einer vereinfachten Darstellung. Gezeigt ist lediglich eine einzige Verteilmatrix M, die optische Ausgangssignale auf vier Freiraumkoppler FSC1 bis FSC4 verteilt. Die divergent in der vorderen Brennebene 21 aus den Freiraumkopplern FSC1 bis FSC4 austretenden Ausgangssignale werden durch Ablenkoptik 20 kollimiert und in unterschiedliche Richtungen abgelenkt, wie dies die Figur 4 illustriert. Werden die optischen Signale der Reihe nach auf die Freiraumkoppler FSC1 bis FSC4 aufgeschaltet, wandern die von der Scanvorrichtung 14 ausgehenden Lichtstrahlen von der mit durchgezogenen Linien angedeuteten Richtung (Lichtstrahl L11) schrittweise zu der mit gestrichelten Linien angedeuteten Richtung (Lichtstrahl L14).

Im Folgenden wird wieder Bezug auf die Figur 3 genommen. Bei der rechts neben der Ablenkoptik 20 angedeuteten Struktur handelt es sich um ein dispersives optisches Element 22, dessen Bedeutung weiter unten näher erläutert wird.

Die optischen Schalter S11, S21, S22 der Verteilmatrizen M1 bis M4 und die Lichtquelle 16 werden von einer Steuer- und Auswerteeinrichtung 24 gesteuert, die in der Figur 3 als Mikroprozessor µP angedeutet ist. Die Steuer- und Auswerteeinrichtung 24 ist außerdem mit den elektrischen Ausgängen der Detektoren D1 bis D4 verbunden.

### 3. Funktion

Nachfolgend wird unterstellt, dass die Lichtquelle 16 ein optisches Ausgangssignal erzeugt, dessen Frequenz ein periodisches Dreieckssignal erzeugt, wie dies oben bereits erläutert wurde.

Das optische Ausgangssignal wird nach der Verstärkung durch den Verstärker 18 auf die Verarbeitungseinheiten PU1 bis PU4 verteilt und dort von den Zirkulatoren C1 bis C4 den Verteilmatrizen M1 bis M4 übergeben, die es wahlweise einem der Freiraumkoppler FSC zuleiten. Infolge der parallelen Anordnung der Verarbeitungseinheiten PU1 bis PPU4 tritt während jedes Messintervalls Δt aus jeder Verarbeitungseinheit PU1 bis PU4 somit genau ein optisches Ausgangssignal aus und wird von der Ablenkoptik 20 in eine Richtung gerichtet, die durch den Ort des betreffenden Freiraumkopplers FSC in der Brennebene der Ablenkoptik 20 bestimmt ist.

Im Folgenden wird angenommen, dass es sich bei diesen Lichtstrahlen um die Lichtstrahlen L11 bis L14 handelt, die in der Figur 2 gezeigt sind. Treffen diese in einer horizontalen Ebenen abgestrahlten Lichtstrahlen L11 bis L14 auf das Objekt 12, werden sie an dessen Oberfläche diffus reflektiert und somit über einen größeren Raumwinkelbereich hinweg zurückgestrahlt. Ein kleiner Teil des auf das Objekt 12 auftreffenden Lichts wird retroreflektiert, d.h. in die gleiche Richtung zurückgestrahlt, entlang der sich das Licht auf dem Weg zum Objekt 12 hin ausgebreitet hat. In der Figur 3 sind die Lichtwege der optischen Ausgangssignale und der am Objekt 12 reflektierten Messsignale für den Freiraumkoppler FSC11 durch Pfeile für den Lichtstrahl L11 angedeutet.

Die Messsignale koppeln in die Freiraumkoppler FSC ein und gelangen über die Verteilmatrizen M1 bis M4 auf den Zirkulator C1 bis C4 der jeweiligen Verarbeitungseinheit PU1 bis PU4, der sie dem entsprechenden Detektor D1 bis D4 zuleitet. Dort werden die Messsignale den von der Lichtquelle 16 erzeugten optischen Ausgangssignalen überlagert.

Während des Zeitraums, den das Licht für den Weg zum Objekt 12 und zurück benötigt, hat sich die Frequenz der von der Lichtquelle 16 erzeugten optischen Ausgangssignale verändert. Da die optischen Ausgangssignale und die Messsignale ähnliche Frequenzen haben, führt die Überlagerung zu einer Schwebung, deren Frequenz durch Berechnung der FFT (*Fast Fourier Transform*) ermittelt werden kann. Die Schwebungsfrequenz kann direkt in einen Abstandswert umgerechnet werden. Aus der Dopplerverschiebung kann außerdem auf die Relativgeschwindigkeit zwischen dem Fahrzeug 10 und dem Objekt 12 zurückgeschlossen werden. Störsignale vom Umgebungslicht oder von Scaneinrichtungen anderer Fahrzeuge 10 können mangels Kohärenz mit den von der Lichtquelle 16 erzeugten Ausgangssignalen die Messung nicht beeinträchtigen.

Diese Berechnungen werden von der Aussteuer- und Auswerteeinrichtung 24 durchgeführt. Sie ordnet die berechneten Abstände und Relativgeschwindigkeiten den Richtungen zu, in welche die optischen Ausgangssignale von der Ablenkoptik 20 abgestrahlt wurden. Dadurch erhält man ein dreidimensionales Bild der Umgebung.

Im Folgenden wird die Bedeutung des optionalen dispersiven optischen Elements 22, das beispielsweise als optisches Gitter ausgebildet sein kann, erläutert. Das dispersive optische Element 22 spaltet die optischen Signale in einer Ebene wellenlängenabhängig auf, die zumindest im Wesentlichen senkrecht zu der Ebene angeordnet ist, innerhalb der sich die aus den Freiraumkopplern FSC austretenden optischen Ausgangssignale ausbreiten. Diese wellenlängenabhängige Aufspaltung senkrecht zur Papierebene ist in der Figur 3 durch ein Strahlenbündel 26 angedeutet. Innerhalb einer horizontalen Scanebene, wie sie in der Figur 2 gezeigt ist, haben die Lichtstrahlen L11 bis L14 beispielsweise Frequenzen innerhalb eines ersten Frequenzbandes, die Lichtstrahlen L21 bis L24 der nächsten und der dazu geneigten Scanebene haben Frequenzen in einem dazu verschiedenen zweiten Frequenzband, usw.

Um gleichzeitig mehrere optische Ausgangssignale in unterschiedlichen Frequenzbändern erzeugen zu können, enthält die Lichtquelle 16 mehrere nicht dargestellte Einzelquellen, deren Ausgangssignale in unterschiedlichen Frequenzbändern liegen und die überlagert werden, sodass alle Verarbeitungseinheiten PU1 bis PU4 gleichzeitig optische Ausgangssignale in mehreren Frequenzbändern erhalten.

Ein Scannen senkrecht zur Papierebene kann alternativ auch in herkömmlicher Weise mit Hilfe eines rotierenden Spiegels bewirkt werden. Da ein solcher Spiegel nur um eine Achse rotieren muss, kann er mechanisch robust aufgebaut sein. Bevorzugt ist aber für diese Scanrichtung, auf die Verwendung beweglicher Bauteile zu verzichten.

Durch die parallele Anordnung der Verarbeitungseinheiten PU1 bis PU4 mit jeweils einer relativ geringen Zahl von optischen Schaltern S11, S21, S22 muss das vom Objekt 12 reflektierte Messlicht auf seinem Weg zu einem der Detektoren D1 bis D4 nur wenige optische Schalter und nur einen der Zirkulatoren C1 bis C4 durchlaufen. Bei einer Verteilmatrix M mit 8 Ausgängen beträgt die Einfügedämpfung der gesamten Verteilmatrix beispielsweise 3 dB, was einem Verlust von rund 50% entspricht. Dadurch wird das reflektierte Messsignal auf seinem Weg zum jeweiligen Detektor D nur relativ wenig abgeschwächt und kann mit ausreichend hohem Signal-Rausch-Verhältnis detektiert werden. Trotzdem wird eine hohe Pixelrate erzielt, da gleichzeitig mehrere (hier: vier) Lichtstrahlen erzeugt werden können.

Vorteilhaft an dem parallelen Aufbau ist ferner die Tatsache, dass durch die Aufteilung der optischen Ausgangssignale auf mehrere Verarbeitungseinheiten PU1 bis PU4 am Eingang jeder Verteilmatrix M1 bis M4 keine sehr hohe optische Intensität anliegt, wie dies bei Abstandsscannern mit einer einzigen großen Verteilmatrix wegen der dann größeren Gesamt-Einfügedämpfung der Fall muss. Es hat sich nämlich gezeigt, dass vor allem die den höchsten Intensitäten ausgesetzten optischen Schalter auf dem niedrigsten Niveau der Verteilmatrizen - hier also die Schalter S11 - sehr hohen Intensitäten dauerhaft nicht standhalten.

### 4. Aufbau und Funktion der optischen Verteilmatrizen

Die Figuren 5a bis 5d zeigen zwei benachbarte Verteilmatrizen M1, M2 in unterschiedlichen Schaltstellungen für ein Ausführungsbeispiel, bei dem jede Verteilmatrix M1, M2 eingehende optische Ausgangssignale wahlweise auf einen von jeweils acht optischen Wellenleitern verteilen kann, die mit Freiraumkopplern FSC verbunden sind. Der Einfachheit halber sind die rechts dargestellten Freiraumkoppler FSC lediglich mit arabischen Ziffern nummeriert, und zwar in der Reihenfolge, in der sie optische Ausgangssignale abgeben. Diejenigen Freiraumkoppler FSC, die in der gegebenen Schaltstellung der optischen Schalter mit dem Eingang der jeweiligen Verteilmatrix M1, M2 verbunden sind, sind in den Figuren 5a bis 5d durch dunkle Hinterlegung und einen benachbart angeordneten Pfeil hervorgehoben. Aus dem so hervorgehobenen Freiraumkoppler FSC können somit optische Ausgangssignale austreten und nach Reflexion am Objekt 12 als Messsignale wieder eintreten.

Im Gegensatz zu dem in der Figur 3 gezeigten Ausführungsbeispiel haben die Verteilmatrizen M1, M2 jeweils drei Niveaus N1, N2, N3, wobei sich die Zahl der optischen 1x2-Schalter beim Übergang zum nächsthöheren Niveau jeweils verdoppelt. Werden als optische Schalter 1 x 3-Schalter eingesetzt, verdreifacht sich die Zahl der optischen Schalter zwischen aufeinanderfolgenden Niveaus entsprechend. Anstelle der 1 x n-Schalter können natürlich auch z.B. n x n-Schalter eingesetzt werden, bei denen ein Eingang jeweils unbesetzt bleibt.

In den Schaltmatrizen M1, M2 werden zwei unterschiedliche Typen von optischen Schaltern eingesetzt, die im Folgenden kurz als schnelle optische Schalter und als langsame optische Schalter bezeichnet werden. Die schnellen optischen Schalter sind in den Figuren 5a bis 5d grau hinterlegt und mit abgerundeten Ecken hervorgehoben. Die schnellen optischen Schalter haben die Eigenschaft, dass sie eine kurze Schaltzeit haben, d.h. in sehr kurzer Zeit ihren Schaltzustand ändern können. Damit einher geht aber eine vergleichsweise hohe Einfügedämpfung.

Bei den langsamen Schaltern hingegen ist die Schaltzeit länger, so dass diese nicht so schnell ihren Schaltzustand wechseln können wie die schnellen Schalter. Dafür haben die langsamen Schalter eine niedrigere Einfügedämpfung als die schnellen Schalter, so dass optische Signale beim Durchtritt durch die langsamen Schalter weniger abgeschwächt werden als beim Durchtritt durch einen schnellen Schalter.

Im dargestellten Ausführungsbeispiel befinden sich die schnellen Schalter ausschließlich auf dem niedrigsten Niveau N1 und somit am Eingang der Verteilmatrizen M1, M2. Für die höheren Niveaus N2 und N3 werden ausschließlich langsame optische Schalter eingesetzt. Durch eine geeignete Ansteuerung der Verteilmatrizen M1, M2 lässt sich erreichen, dass die Verteilmatrizen M1, M2 insgesamt eine sehr niedrige Einfügedämpfung haben, aber trotzdem mit den kurzen Schaltzeiten der schnellen Schalter betrieben werden können. Eine solche Ansteuerung wird im Folgenden näher erläutert.

Die Figur 5a zeigt die beiden Verteilmatrizen M1, M2 während eines ersten Messintervalls Δt1. Der schnelle optische Schalter S11 in jeder Verteilmatrix M1 leitet die optischen Ausgangssignale zum langsamen Schalter S21 und dieser zum langsamen Schalter S31, so dass die optischen Ausgangssignale aus dem Freiraumkoppler FSC1 austreten. Aktiv sind in dieser Schaltstellung somit nur die Schalter S11, S21 und S31; durch die übrigen optischen Schalter treten während des ersten Messintervalls Δt1 keine optischen Ausgangssignale.

Nach Beendigung des Messintervalls Δt1 wird der schnelle optische Schalter S11 der Verteilmatrizen M1, M2 umgestellt. Diese Umstellung erfolgt sehr schnell, da der schnelle optische Schalter S11 eine kurze Schaltzeit hat. Zwischen zwei aufeinanderfolgenden Messintervallen geht somit nur wenig Zeit für die Umstellung der Verteilmatrizen M1, M2 verloren.

Infolge der Umstellung des Schalters S11 werden die optischen Ausgangssignale nun über die langsamen Schalter S22 und S33 den Freiraumkopplern FSC2 zugeleitet, die aber nicht benachbart zu den Freiraumkopplern FSC1 angeordnet sind, wie dies in der Figur 5b erkennbar ist.

Während des zweiten Messintervalls Δt2 wird in jeder Verteilmatrix M1, M2 der langsame optische Schalter S31 auf dem Niveau N3 umgestellt. In den Figuren 5b bis 5d sind diejenigen langsamen optischen Schalter, die während eines Messintervalls verstellt werden, durch graue Hinterlegung und einen Pfeil hervorgehoben. Für diese Umstellung steht das gesamte Messintervall Δt2 zur Verfügung, so dass die maximale Schaltgeschwindigkeit der langsamen Schalter lediglich kürzer sein muss als die Länge der Messintervalle.

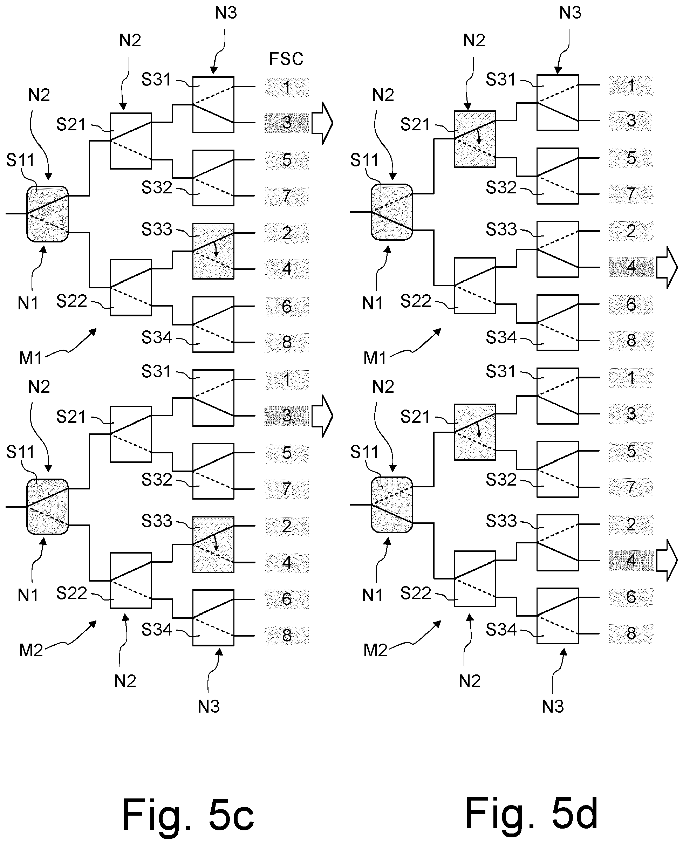

Nach Abschluss des zweiten Messintervalls Δt2 wird in den Verteilmatrizen M1, M2 jeweils der schnelle Schalter S11 auf dem Niveau N1 wieder in seine ursprüngliche Schaltstellung zurückgeführt. Infolge dieser Umstellung und der zuvor erfolgten Umstellung des langsamen Schalters S31 werden die optischen Ausgangssignale nun jeweils auf den Freiraumkoppler FSC3 geleitet, wie dies die Figur 5c illustriert. Auch der Freiraumkoppler FSC3 ist nicht benachbart zum vorher aktiven Freiraumkoppler FSC2 angeordnet. Während des dritten Messintervalls Δt3 wird wieder ein inaktiver langsamer optischer Schalter, hier der Schalter S33, umgestellt.

Wenn nach Abschluss des dritten Messintervalls Δt3 der schnelle optische Schalter S11 wieder seine Stellung wechselt, werden die optischen Signale sofort dem Freiraumkoppler FSC4 zugeführt, wie dies die Figur 5d zeigt. Während des vierten Messintervalls Δt4 wird der langsame Schalter S21 aus dem zweiten Niveau N2 umgestellt, um im darauffolgenden fünften Messintervall den Eingang der Verteilmatrizen M1, M2 mit dem Freiraumkoppler FSC5 verbinden zu können, usw.

Da die entlang einer Linie nebeneinander angeordneten Freiraumkoppler FSC nicht nacheinander durchgeschaltet werden, sondern der schnelle optische Schalter S11 immer zwischen zwei Gruppen von jeweils vier Freiraumkopplern hin- und herschaltet, wird die maximale Schaltgeschwindigkeit der Verteilmatrizen M1, M2 nur durch die kurzen Schaltzeiten der schnellen Schalter S11 begrenzt. Trotzdem ist die Einfügedämpfung der beiden Verteilmatrizen M1, M2 niedrig, da die optischen Ausgangssignale (und in Rückrichtung die vom Objekt 12 reflektierten Messsignale) überwiegend optische Schalter mit einer besonders niedrigen Einfügedämpfung auf den Niveaus N2 und N3 durchtreten.

Je größer die Zahl der Niveaus ist, desto weniger fällt die höhere Einfügedämpfung der schnellen Schalter S11 ins Gewicht. Andererseits sollte die Zahl der Niveaus auch nicht zu groß sein, da auch die langsamen Schalter auf den höheren Niveaus die optischen Signale spürbar dämpfen. Als ideal haben sich drei oder vier Niveaus und damit eine Verteilung auf acht bzw. sechzehn optische Wellenleiter herausgestellt.

### 5. Weitere Ausführungsbeispiele

Die Figuren 6a und 6b zeigen ein Ausführungsbeispiel, bei dem schnelle optische Schalter nicht nur im niedrigsten Niveau N1, sondern auch im nächsthöheren Niveau N2 angeordnet sind. Wie ein Vergleich der Figuren 6a und 6b zeigt, liegen dadurch die Freiraumkoppler FSC, bei denen in aufeinander folgenden Messintervallen Δt optische Ausgangssignale austreten, dichter beieinander als bei dem in den Figuren 5a bis 5d gezeigten Ausführungsbeispiel. Für bestimmte Anwendungen kann dies vorteilhaft sein.

Für die meisten Anwendungen jedoch - darunter auch Abstandsscanner für Fahrzeuge - spielt die Reihenfolge keine Rolle, in der die Freiraumkoppler FSC optische Ausgangssignale abgeben. Da durch die zusätzlichen schnellen optischen Schalter auf dem Niveau N2 eine höhere Einfügedämpfung entsteht, wird die in den Figuren 5a bis 5d gezeigte Anordnung in der Regel zu bevorzugen sein.

Die Figur 7 zeigt in einer an die Figur 3 angelehnten schematischen Darstellung eine Verarbeitungseinheit PU1 gemäß einem Ausführungsbeispiel, bei dem die von der Lichtquelle 16 erzeugten optischen Ausgangssignale nicht bereits vor der Verteilung auf die Verarbeitungseinheiten PU1 bis PU4 mit Hilfe des Verstärkers 18 verstärkt werden, sondern erst innerhalb der einzelnen Verarbeitungseinheiten. Dazu enthält jede der Verarbeitungseinheiten einen eigenen Verstärker, der für die Verarbeitungseinheit PU1 in der Figur 7 mit A1 bezeichnet ist. Außerdem enthält die Verteilmatrix M1 der Verarbeitungseinheit PU1 nicht zwei, sondern drei Niveaus, so dass acht Freiraumkoppler FSC angesteuert werden können.

Die Figur 8 zeigt eine Anordnung von sechs Verarbeitungseinheiten PU1 bis PU6, die jeweils den in der Figur 7 gezeigten Aufbau haben. Infolge dieser Anordnung sind die Freiraumkoppler FSC1 insgesamt nicht entlang einer Linie, sondern in einem regelmäßigen zweidimensionalen Array neben- und übereinander angeordnet. Wird eine solche Anordnung in der Brennebene der Ablenkoptik 20 angeordnet, lässt sich die Umgebung in der horizontalen und vertikalen Richtung auch ohne Verwendung des dispersiven optischen Elements 22 und einer aufwendigeren Lichtquelle 16 abscannen. Die jeweils unmittelbar benachbart angeordneten Verarbeitungseinheiten PU1 und PU2, PU3 und PU4 sowie PU5 und PU6 können beispielsweise jeweils die Abtastung in horizontalen Ebenen bewirken, die in vertikaler Richtung geneigt zueinander angeordnet sind, wie dies die Figuren 1 und 2 illustrieren.

## Patentansprüche

1. Vorrichtung zur scannenden Messung des Abstands zu einem Objekt (12), mit
einer Lichtquelle (16), die dazu eingerichtet ist, ein optisches Ausgangssignal mit einer zeitlich variierenden Frequenz zu erzeugen,
einer optische Verteilmatrix (M1 bis M4), welche die Struktur eines Baums mit mehreren Niveaus (N1 bis N3) hat und dazu eingerichtet ist, das von der Lichtquelle (16) erzeugte optische Ausgangssignal sukzessive auf mehrere optische Wellenleiter (W11 bis W14) zu verteilen, wobei die optische Verteilmatrix (M1 bis M4)
mindestens einen ersten optischen Schalter (S11) aufweist, der eine erste Schaltzeit und eine erste Einfügedämpfung hat,
mehrere zweite optische Schalter (S21, S22, S31 bis S34) aufweist, die jeweils eine zweite Schaltzeit, die länger ist als die erste Schaltzeit, und eine zweite Einfügedämpfung haben, die kleiner ist als die erste Einfügedämpfung, und
wobei der erste optische Schalter (S11) auf einem Niveau (N1) des Baums angeordnet ist, das niedriger ist als das Niveau (N2, N3), auf dem die zweiten optischen Schalter (S21, S22, S31 bis S34) angeordnet sind,
mehrere Freiraumkoppler (FRC), die mit den optischen Wellenleitern (W11 bis W14) verbunden und jeweils dazu eingerichtet sind,
ein in einem der optischen Wellenleiter (W11 bis W14) geführtes optisches Ausgangssignal in den Freiraum auszukoppeln und
ein an dem Objekt (12) reflektiertes optisches Ausgangssignal als optisches Messsignal einzukoppeln,
einen Detektor (D1 bis D4), der dazu eingerichtet ist, eine Überlagerung des optischen Messsignals mit dem von der Lichtquelle (16) erzeugten optischen Ausgangssignal zu erfassen,
einer Ablenkoptik (20), die dazu eingerichtet ist, die aus den Freiraumkopplern (FSC) ausgekoppelten Ausgangssignale so abzulenken, dass sie in unterschiedliche Richtungen abgestrahlt werden, und mit
einer Auswerteeinrichtung (24), die dazu eingerichtet ist, aus der von den Detektoren (D1 bis D4) erfassten Überlagerung einen Abstand zu dem Objekt (12) zu bestimmen.

2. Vorrichtung nach Anspruch 1, bei welcher der erste optische Schalter (S11) auf dem niedrigsten (N1) Niveau des Baums angeordnet ist und auf allen anderen Niveaus (N2, N3) ausschließlich zweite optische Schalter (S21, S22, S31 bis S34) angeordnet sind.

3. Vorrichtung nach einem der Ansprüche 1 oder 2, bei der die optischen Schalter (S11, S21, S22, S31 bis S34) 1x2-Schalter sind.

4. Vorrichtung nach einem der vorhergehenden Ansprüche, bei der die optischen Schalter (S11, S21, S22, S31 bis S34) ein thermooptisches Mach-Zehnder-Interferometer enthalten.

5. Vorrichtung nach einem der vorhergehenden Ansprüche, bei der die Ablenkoptik (20) eine vordere Brennebene (21) hat, in der die Freiraumkoppler (FRC) oder Bilder der Freiraumkoppler (FSC) angeordnet sind.

6. Vorrichtung nach einem der vorhergehenden Ansprüche, bei der die Detektoren (D1 bis D4) symmetrische Fotodetektoren und mit der Lichtquelle (16) verbunden sind.

7. Vorrichtung nach einem der vorhergehenden Ansprüche, bei der die Lichtquelle (16) dazu eingerichtet ist, gleichzeitig mehrere optische Ausgangssignale mit zeitlich variierender Frequenz in unterschiedlichen Frequenzbändern zu erzeugen.

8. Vorrichtung nach Anspruch 7, mit einem dispersiven optischen Element, das die optischen Ausgangssignale in einer ersten Ebene wellenlängenabhängig aufspaltet, die zumindest im Wesentlichen senkrecht zu einer zweiten Ebene angeordnet ist, innerhalb derer die sich aus den Freiraumkopplern (FRC) austretenden optischen Ausgangssignale ausbreiten.

9. Vorrichtung nach einem der vorhergehenden Ansprüche, bei der die Freiraumkoppler (FSC) in einer zweidimensionalen regelmäßigen oder unregelmäßigen Anordnung verteilt sind.

10. Verfahren zur scannenden Messung des Abstands zu einem Objekt (12) mit folgenden Schritten:
h) es werden in zeitlich aufeinander folgenden Messintervallen (Δt) optische Ausgangssignale erzeugt, wobei sich innerhalb eines jeden Messintervalls eine Frequenz des Ausgangssignals erhöht oder erniedrigt;
i) eine optische Verteilmatrix (M1 bis M4), welche die Struktur eines Baums mit mehreren Niveaus (N1 bis N3) hat, verteilt das von der Lichtquelle (16) erzeugte optische Ausgangssignal sukzessive auf mehrere optische Wellenleiter (W11 bis W14), wobei die optische Verteilmatrix (M1 bis M4)
mindestens einen ersten optischen Schalter (S11) aufweist, der eine erste Schaltzeit und eine erste Einfügedämpfung hat,
mehrere zweite optische Schalter (S21, S22, S31 bis S34) aufweist, die jeweils eine zweite Schaltzeit, die länger ist als die erste Schaltzeit, und eine zweite Einfügedämpfung haben, die kleiner ist als die erste Einfügedämpfung, und wobei
der erste optische Schalter (S11) auf einem Niveau (N1) des Baums angeordnet ist, das niedriger ist als das Niveau, auf dem die zweiten optischen Schalter (S21, S22, S31 bis S34) angeordnet sind, und wobei
der erste Schalter (S1) nur in Zeiten zwischen zwei aufeinander folgenden Messintervallen betätigt wird und die zweiten Schalter (S21, S22, S31 bis S34) zumindest auch während der Messintervalle betätigt werden,
j) die in den optischen Wellenleitern (W11 bis W14) geführten optischen Ausgangssignale werden in einen Freiraum ausgekoppelt und in unterschiedliche Richtungen abgestrahlt;
k) an dem Objekt (12) reflektierte optische Ausgangssignale werden als optische Messsignale in die optischen Wellenleiter (W11 bis W14) eingekoppelt;
l) die in die optischen Wellenleiter (W11 bis W14) eingekoppelten optischen Messsignale durchtreten die Verteilmatrix (M1 bis M4) und treffen auf einen Detektor (D1 bis D4);
m) der Detektor (D1 bis D4) erfasst eine Überlagerung der optischen Messsignale mit den von der Lichtquelle (16) erzeugten optischen Ausgangssignalen;
n) aus der von dem Detektor (D1 bis D4) erfassten Überlagerung wird ein Abstand zu dem Objekt (12) bestimmt.
